# EUROPÄISCHE PATENTSCHRIFT

(11) **EP 2 698 315 B1**
(45) Veröffentlichungstag und Bekanntmachung des Hinweises auf die Patenterteilung: **14.10.2015**
(21) Anmeldenummer: 13000498.9
(22) Anmeldetag: 01.02.2013
(51) Int. Cl.: B63H 23/32, F16J 15/00, F16J 15/40

(54) **Abdichtung für rotierende Wellen von Schiffspropellern**
Seal for the rotating shafts of ship propellers
Étanchéification pour un arbre rotatif d'hélices de bateau

(30) Priorität: 18.08.2012 DE 102012016447
(43) Veröffentlichungstag der Anmeldung: 19.02.2014
(73) Patentinhaber: SKF Blohm + Voss Industries GmbH, 20457 Hamburg (DE)
(72) Erfinder: Fangauf, Carlos, 20259 Hamburg (DE); Wrage, Marko, 24643 Struvenhütten (DE)
(74) Vertreter: Marschall, Stefan

(56) Entgegenhaltungen:
- EP-A1- 0 335 368
- EP-A1- 1 182 133
- GB-A- 2 174 156
- GB-A- 2 244 528
- JP-A- H06 249 346

## Beschreibung

Die Erfindung bezieht sich auf eine Vorrichtung zum Abdichten einer Schiffspropellerwelle zwischen Außenwasser und einem Schmiermittelraum mit einer Mehrfachdichtung, die außenwasserseitig mindestens einen nach außen gerichteten Dichtring und Schmiermittelraumseitig mindestens einen nach innen gerichteten Dichtring aufweist, wobei jeweils zwischen zwei benachbarten Dichtringen eine Abdichtungskammer ausgebildet ist und eine erste mit Außenwasser gefüllte Abdichtungskammer gebildet sowie mindestens eine über eine Zuleitung mit einem gasförmigen Medium, beaufschlagte zweite Abdichtungskammer angeordnet ist, die einen Ablaufkanal besitzt und eine dritte mit Öl gefüllte Abdichtungskammer mit einer Zuführung im unteren Bereich von einem Tank über eine Zuleitung mit einer Zirkulationspumpe zwischen Tank und Abdichtungskammer ausgebildet ist. Eine derartige Vorrichtung ist aus der gattungsgemässen EP1182133A bekannt.

Eine weitere Vorrichtung ist aus der DE 44 34 247 B bereits bekannt. Es hat sich aber gezeigt, dass durch die Größe der Schiffe immer längere Ölleitungen erforderlich sind sowie damit die Gefahr eines Luftübertritts von einer Luft beaufschlagten Dichtungskammer in eine Öldichtungskammer auftritt und nicht komplett über die Entlüftungsleitung abgeführt wird. Dieses führt oftmals zu einer vorzeitigen Schädigung der Dichtringe.

Ferner hat sich gezeigt, dass das in der Kammer befindliche Öl aufgrund von starken thermischen und mechanischer Beanspruchungen altert. Außerdem kann eine Verschmutzung des Öles mit Verschleißpartikeln aus den Dichtringen und der Buchse oder eine Wasseranreicherung vorkommen. Dieses Öl ist nicht regelmäßig austauschbar, so dass nach einer gewissen Zeit die Schmierung der Dichtringe nicht mehr optimal ist und gegebenenfalls auch ein chemischer Angriff stattfindet.

Die Aufgabe der Erfindung ist es, eine relativ verschleißfeste Anordnung zu schaffen, die die aufgezeigten Mängel auf einfache Weise vermeidet bzw. erheblich herabsetzt, um eine funktionsfähige Vorrichtung zum Abdichten einer Schiffspropellerwelle der gattungsgemäßen Art zu gewährleisten.

Die Lösung der erfindungsgemäßen Aufgabe besteht darin, dass zusätzlich zur Zuleitung im unteren Bereich der Abdichtungskammer eine Ableitung im oberen Bereich der Abdichtungskammer als Verbindung zum Tank angeordnet und die zweite Abdichtungskammer mit gesteuerter Druckluft beaufschlagt ist und eine Luftversorgungsleitung mit einem Steuergerät und einer Druckluftversorgung aufweist und der zweiten Abdichtungskammer eine Drainageleitung mit einem Drainageventil zugeordnet ist.

Hierdurch wird der Vorteil geschaffen, dass ein eventueller Lufteinbruch aus der Dichtungskammer abgeführt wird und das Öl kontinuierlich austauschbar ist. Ferner ist die Einbindung einer kontinuierliche Kühlung des Öls möglich.

Weiterhin ist zur Verbesserung der Anordnung vorgesehen, dass die mit Öl gefüllte Abdichtungskammer mindestens eine zusätzliche mit Öl gefüllte vierte Abdichtungskammer mit nach außen gerichtetem Dichtring aufweist, die mit einem zusätzlichen Tank als Hochtank mit einer Zirkulationspumpe in der Zuleitung zum unteren Bereich und einer Ableitung zum Tank im oberen Bereich der Abdichtungskammer aufweist.

Zusätzlich wird vorgeschlagen, dass eine fünfte Abdichtungskammer zum Schmiermittelraum mit einem separaten Tank im Bereich zwischen 0,5 bis 4 Meter über Wellenmitte angeordnet ist und mit einer Zirkulationspumpe in einer Zuleitung zum unteren Bereich und einer Ableitung zum Tank im oberen Bereich der Abdichtungskammer aufweist.

Ferner ist als Schutzvorrichtung vorgesehen, dass in der Zuleitung zwischen Tank und Abdichtungskammer ein Filter zur Abscheidung von Feststoffpartikel und/oder Wasser angeordnet ist.

Um eine entsprechende Wasserabführung aus dem eingestellten Filter vorzunehmen, ist vorgesehen, dass der Filter in der Zuleitung zwischen Tank und Abdichtungskammer einen Sensor zur Detektion einer Wasserfüllung aufweist.

Weiterhin wird vorgeschlagen, auftretende Blockierungen in der Ölzufuhr dadurch abzuschalten, dass die Zuleitung zwischen Tank und Abdichtungskammer einen Öldurchflussmesser aufweist, der über ein Stellelement eine Bypassleitung vom Tank zur Dichtungskammer einschaltet.

Zur Herabsetzung einer thermischen Belastung ist vorgesehen, dass in der Zuleitung zwischen Tank und Abdichtungskammer ein Ölkühler angeordnet ist.

In der Zeichnung sind Ausführungsbeispiele der Erfindung schematisch dargestellt. Es zeigen:
- Fig. 1: eine Anordnung mit einer aktiven Zirkulation bei einer 4-Lippen-Abdichtung und
- Fig. 2: eine Anordnung wie Fig. 1 mit einer 6-Lippen-Abdichtung

Bei den gezeigten Anordnungen zur Abdichtung von Schiffspropellerwellen 28 mit einem Schiffspropeller 19 und einem Stevenrohr bzw. einem Podgehäuse 27 ist eine Abdichtanordnung 18 als Mehrfachdichtung ausgebildet. Diese Abdichtanordnung 18 ist zwischen einem Außenwasserbereich 20, wie Seewasser, und einem Schmierölbereich 26 angeordnet und wird über eine Steueranordnung 1 versorgt und gesteuert.

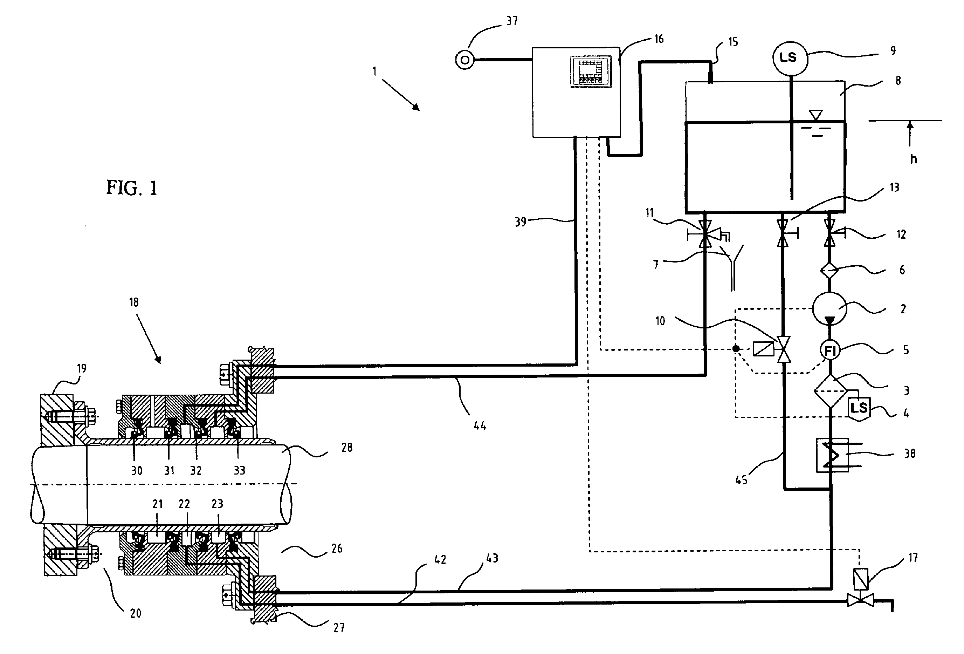

Gemäß der Ausbildung nach Fig. 1 ist die Abdichtanordnung 18 durch parallele Abdichtungskammern 21, 22, 23 gebildet, wobei außenwasserseitig ein nach außen gerichteter Dichtring 30 und zum Schmiermittelraum 26 ein nach innen gerichteter Dichtring 33 angeordnet sind, zwischen denen weitere Dichtringe 31, 32 angeordnet sind. Hierdurch werden die Abdichtungskammern 21, 22 und 23 gebildet.

Die erste Abdichtungskammer 21 ist mit Außenwasser gefüllt, während die nachfolgende zweite Abdichtungskammer 22 mit gesteuerter Druckluft in bekannter Weise beaufschlagt ist und eine Luftversorgungsleitung 39 zu der Steueranordnung 1 mit einem Steuergerät 16 und einer Druckluftversorgung 37 aufweist. Zusätzlich ist eine Drainageleitung 42 mit einem Drainageventil 17 der Abdichtungskammer 22 zugeordnet.

Die dritte Abdichtungskammer 23 ist mit Öl gefüllt und steht über eine Zuleitung 43 im unteren Bereich der Abdichtungskammer 23 mit einem Tank 8 in Verbindung, während der obere Bereich der Abdichtungskammer 23 eine Ableitung 44 zum Tank 8 aufweist.

Der Tank 8 ist über eine Leitung 15 über das Steuergerät 16 mit der Druckluftversorgung 37 verbunden und dient zur Druckentlastung der Dichtringe 32, 33 in Abhängigkeit vom Druck in der Abdichtungskammer 22 mit Druckluft. Ferner sind dem Tank 8 Absperrventile 11, 12, 13 zugeordnet und ein Auffangtrichter 7 für eine Ölentsorgung in die Bilge. Zusätzlich ist ein Schwimmerschalter 9 für die Systemsicherheit für eine Tankbefüllung angeordnet.

Für eine Ölzirkulation der Abdichtungskammer 23 über die Zuleitung 43 und Ableitung 44 ist in der Zuleitung 43 eine Zirkulationspumpe 2 angeordnet. Dabei ist in diesem Fall ein Schmutzfänger 6 zum Schutz der Pumpe vorgeschaltet und es befindet sich ein nachgeschalteter Filter 3 mit einem Schwimmerschalter 4 zur Wasserwarnung im Filter 3 der Zuleitung 43. Zusätzlich ist ein Ölflussmesser 5 angeordnet, der bedarfsweise über ein Ventil 10 gegebenenfalls eine Bypassleitung 45 vom Tank 8 einschaltet und ein Alarmsignal generiert. Zur Lebensdauererhöhung der Dichtringe 32, 33 befindet sich ein Ölkühler 38 in der Zuleitung 43. Damit ist eine laufende Ölzirkulation des Öls mit Durchführung einer entsprechenden Aufbereitung möglich.

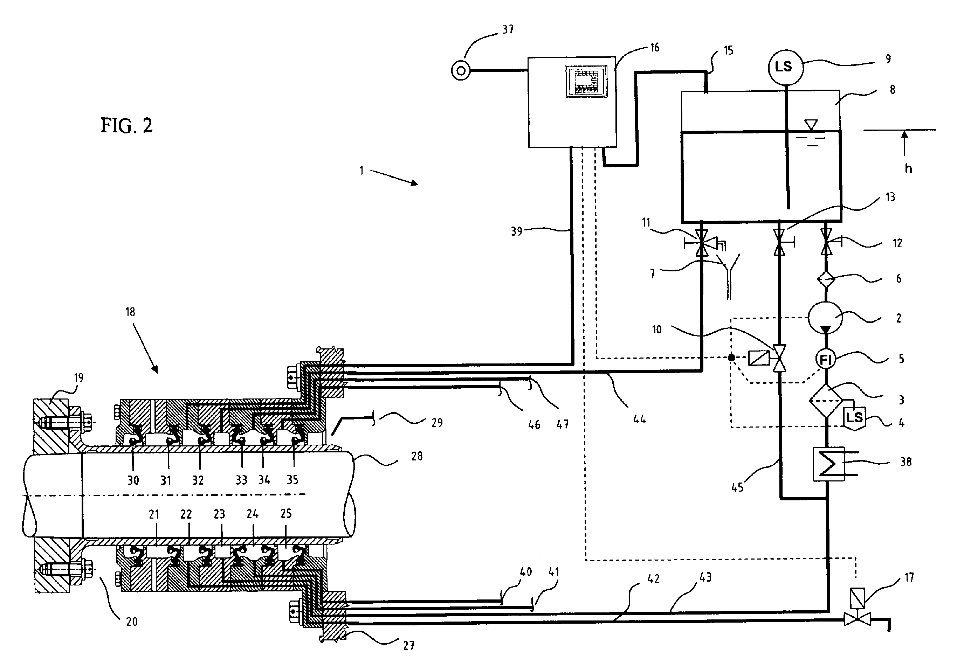

In der weiteren Ausführung gemäß Fig. 2 sind zur Ausführung gemäß Fig. 1 zusätzlich mit Öl gefüllte Abdichtungskammern 24 und 25 durch Dichtringe 34, 35 gebildet. Hierbei ist zusätzlich eine Spritzölversorgung 29 für eine Schmierung angeordnet.

Es ist entsprechend zur Ölzirkulation eine Anordnung, wie bei der dritten Abdichtungskammer 23 vorgesehen. Dabei ist die vierte und fünfte Abdichtungskammer 24, 25 über Zuleitungen 40, 41 und Ableitungen 46 und 47 sowie eine Pumpe mit nicht näher dargestellten Tanks verbunden, um in ähnlicher weise eine Ölzirkulation und einen Druckaufbau einzustellen.

## Patentansprüche

1. Vorrichtung zum Abdichten einer Schiffspropellerwelle (28) zwischen Außenwasser (20) und einem Schmiermittelraum (26) mit einer Mehrfachdichtung (18), die außenwasserseitig mindestens einen nach außen gerichteten Dichtring (30) und Schmiermittelraumseitig mindestens einen nach innen gerichteten Dichtring (33) aufweist, wobei jeweils zwischen zwei benachbarten Dichtringen (30, 31, 32, 33) eine Abdichtungskammer ausgebildet ist und eine erste mit Außenwasser gefüllte Abdichtungskammer (21) gebildet sowie mindestens eine über eine Zuleitung mit einem gasförmigen Medium, beaufschlagte zweite Abdichtungskammer (22) angeordnet ist, die einen Ablaufkanal (42) besitzt und eine dritte mit Öl gefüllte Abdichtungskammer (23) mit einer Zuführung im unteren Bereich von einem Tank (8) über eine Zuleitung (43) mit einer Zirkulationspumpe (2) zwischen Tank (8) und Abdichtungskammer (23) ausgebildet ist, **dadurch gekennzeichnet, dass** zusätzlich zur Zuleitung (43) im unteren Bereich der Abdichtungskammer (23) eine Ableitung (44) im oberen Bereich der Abdichtungskammer (23) als Verbindung zum Tank (8) angeordnet und die zweite Abdichtungskammer (22) mit gesteuerter Druckluft beaufschlagt ist und eine Luftversorgungsleitung (39) mit einem Steuergerät (16) und einer Druckluftversorgung (37) aufweist und der zweiten Abdichtungskammer (22) eine Drainageleitung (42) mit einem Drainageventil (17) zugeordnet ist.

2. Vorrichtung nach Anspruch 1, **dadurch gekennzeichnet, dass** die mit Öl gefüllte Abdichtungskammer (23) mindestens eine zusätzliche mit Öl gefüllte vierte Abdichtungskammer (24) mit nach außen gerichtetem Dichtring (34) aufweist, die mit einem zusätzlichen Tank als Hochtank mit einer Zirkulationspumpe in der Zuleitung (41) zum unteren Bereich und einer Ableitung (47) zum Tank im oberen Bereich der Abdichtungskammer (24) aufweist.

3. Vorrichtung nach Anspruch 1 oder 2, **dadurch gekennzeichnet, dass** eine fünfte Abdichtungskammer (25) zum Schmiermittelraum mit einem separaten Tank im Bereich zwischen 0,5 bis 4 Meter über Wellenmitte angeordnet ist und mit einer Zirkulationspumpe in einer Zuleitung (40) zum unteren Bereich und einer Ableitung (46) zum Tank im oberen Bereich der Abdichtungskammer (25) aufweist.

4. Vorrichtung nach einem der Ansprüche 1 bis 3, **dadurch gekennzeichnet, dass** in der Zuleitung (40) zwischen Tank (8) und Abdichtungskammer (23) ein Filter (3) zur Abscheidung von Feststoffpartikel und/oder Wasser angeordnet ist.

5. Vorrichtung nach einem der Ansprüche 1 bis 4, **dadurch gekennzeichnet, dass** der Filter (3) in der Zuleitung (40) zwischen Tank (8) und Abdichtungskammer (23) einen Sensor (4) zur Detektion einer Wasserfüllung aufweist.

6. Vorrichtung nach einem der Ansprüche 1 bis 5, **dadurch gekennzeichnet, dass** die Zuleitung (43) zwischen Tank (8) und Abdichtungskammer (23) einen Öldurchflussmesser (5) aufweist, der über ein Stellelement (10) eine Bypassleitung (45) vom Tank (8) zur Dichtungskammer (23) einschaltet.

7. Vorrichtung nach einem der Ansprüche 1 bis 6, **dadurch gekennzeichnet, dass** der Filter (3) in der Zuleitung (40) zwischen Tank (8) und Abdichtungskammer (23) einen Sensor (4) zur Detektion einer Wasserfüllung aufweist.

8. Vorrichtung nach einem der Ansprüche 1 bis 7, **dadurch gekennzeichnet, dass** der Tank (8) zur Druckbeaufschlagung mit einer Druckluftversorgung (37) verbunden ist.

9. Vorrichtung nach einem der Ansprüche 1 bis 8, **dadurch gekennzeichnet, dass** der Tank (8) einen zusätzlichen Nebenstromkreis einen Filter und eine zusätzliche Pumpe aufweist.

## Claims

1. A device for purposes of sealing a ship's propeller shaft (28) between open water (20) and a lubricant chamber (26) with a multiple seal (80), which on the open water side has at least one outwardly-directed sealing ring (30), and on the lubricant chamber side has at least one inwardly-directed sealing ring (33), wherein a sealing chamber is designed between each pair of adjacent sealing rings (30, 31, 32, 33), and a first sealing chamber (21) is formed, filled with open water, together with at least one second sealing chamber (22), arranged such that a gaseous medium is applied via a supply line, which second chamber possesses a discharge passage (42), and a third sealing chamber (23), filled with oil, is designed with a feed in the lower region from a tank (8) via a supply line (43), with a circulation pump (2) between tank (8) and sealing chamber (23), **characterised in that**, in addition to the supply line (43) in the lower region of the sealing chamber (23) a discharge line (44) is arranged in the upper region of the sealing chamber (23) as a connection to the tank (8), and regulated compressed air is applied to the second sealing chamber (22), which has an air supply line (39) with a control unit (16) and a compressed air supply (37), and a drainage line (42) with a drainage valve (17) is assigned to the second sealing chamber (22).

2. The device in accordance with Claim 1, **characterised in that**, the sealing chamber (23) filled with oil has at least one fourth additional sealing chamber (24), filled with oil, with an outwardly-directed sealing ring (34), which has an additional tank as a high-level tank with a circulation pump in the supply line (41) to the lower region, and a discharge line (47) to the tank in the upper region of the sealing chamber (24).

3. The device in accordance with Claim 1 or 2, **characterised in that**, a fifth sealing chamber (25) to the lubrication chamber with a separate tank in the region between 0.5 to 4 metres is arranged above the shaft centre, and has a circulation pump in a supply line (40) to the lower region, and a discharge line (46) to the tank in the upper region of the sealing chamber (25).

4. The device in accordance with one of the Claims 1 to 3, **characterised in that**, a filter (3) is arranged in the supply line (40) between tank (8) and sealing chamber (23) for purposes of separating out solid particles and/or water.

5. The device in accordance with one of the Claims 1 to 4, **characterised in that**, a filter (3) in the supply line (40) between tank (8) and sealing chamber (23) has a sensor (4) for purposes of detecting any filling with water.

6. The device in accordance with one of the Claims 1 to 5, **characterised in that**, the supply line (43) between tank (8) and sealing chamber (23) has an oil flow meter (5), which via an actuating element (10) switches-in a bypass line (45) from the tank (8) to the sealing chamber (23).

7. The device in accordance with one of the Claims 1 to 6, **characterised in that**, a filter (3) in the supply line (40) between tank (8) and sealing chamber (23) has a sensor (4) for purposes of detecting any filling with water.

8. The device in accordance with one of the Claims 1 to 7, **characterised in that**, the tank (8) is connected for purposes of applying pressure with a compressed air supply (37).

9. The device in accordance with one of the Claims 1 to 8, **characterised in that**, the tank (8) has an additional bypass flow circuit, a filter and an additional pump.

## Revendications

1. Dispositif destiné à étanchéifier un arbre d'hélice de bateau (28) entre l'eau extérieure (20) et un espace de lubrifiant (26) comprenant un joint multiple (18) qui présente côté eau extérieure au moins une bague d'étanchéité (30) dirigée vers l'extérieur et côté espace de lubrifiant, au moins une bague d'étanchéité (33) dirigée vers l'intérieur, sachant qu'une chambre d'étanchéité est formée respectivement entre deux bagues d'étanchéité voisines (30, 31, 32, 33) et qu'une première chambre d'étanchéité (21) remplie d'eau extérieure est formée ainsi qu'au moins une deuxième chambre d'étanchéité (22) alimentée en agent gazeux par une ligne d'amenée, qui possède un canal d'écoulement (42), et une troisième chambre d'étanchéité (23) remplie de pétrole avec une amenée dans la partie inférieure d'un réservoir (8) via une ligne d'amenée (43) avec une pompe à circulation (2) entre le réservoir (8) et la chambre d'étanchéité (23), **caractérisé en ce qu'**outre la ligne d'amenée (43) dans la partie inférieure de la chambre d'étanchéité (23), un branchement (44) est disposé dans la partie supérieure de la chambre d'étanchéité (23) en tant que liaison vers le réservoir (8) et la deuxième chambre d'étanchéité (22) est alimentée en air comprimé commandé et présente une ligne d'arrivée d'air (39) avec un appareil de commande (16) et une alimentation en air comprimé (37), et une ligne de purge (42) avec un clapet de purge (17) est attribuée à la deuxième chambre d'étanchéité (22).

2. Dispositif selon la revendication 1, **caractérisé en ce que** la chambre d'étanchéité (23) remplie de pétrole présente au moins une quatrième chambre d'étanchéité (24) supplémentaire remplie de pétrole avec une bague d'étanchéité (34) dirigée vers l'extérieur, qui présente un réservoir supplémentaire en tant que réservoir haut avec une pompe à circulation dans la ligne d'amenée (41) vers la partie inférieure et un branchement (47) vers le réservoir dans la partie supérieure de la chambre d'étanchéité (24).

3. Dispositif selon la revendication 1 ou 2, **caractérisé en ce qu'**une cinquième chambre d'étanchéité (25) vers l'espace de lubrifiant avec un réservoir séparé est placée au niveau entre 0,5 à 4 m au-dessus du milieu d'arbre et présente une pompe à circulation dans une ligne d'amenée (40) vers la partie inférieure et un branchement (46) vers le réservoir dans la partie supérieure de la chambre d'étanchéité (25).

4. Dispositif selon l'une des revendications 1 à 3, **caractérisé en ce qu'**un filtre (3) pour séparer les particules solides et/ou l'eau est disposé dans la ligne d'amenée (40) entre le réservoir (8) et la chambre d'étanchéité (23).

5. Dispositif selon l'une des revendications 1 à 4, **caractérisé en ce que** le filtre (3) dans la ligne d'amenée (40) entre le réservoir (8) et la chambre d'étanchéité (23) présente un capteur (4) pour détecter un remplissage d'eau.

6. Dispositif selon l'une des revendications 1 à 5, **caractérisé en ce que** la ligne d'amenée (43) entre le réservoir (8) et la chambre d'étanchéité (23) présente un débitmètre de pétrole (5) qui commute une ligne de dérivation (45) du réservoir (8) vers la chambre d'étanchéité (23) par le biais d'un élément de commande (10).

7. Dispositif selon l'une des revendications 1 à 6, **caractérisé en ce que** le filtre (3) dans la ligne d'amenée (40) entre le réservoir (8) et la chambre d'étanchéité (23) présente un capteur (4) pour détecter un remplissage d'eau

8. Dispositif selon l'une des revendications 1 à 7, **caractérisé en ce que** le réservoir (8) pour l'alimentation en pression est relié à une alimentation d'air comprimé (37).

9. Dispositif selon l'une des revendications 1 à 8, **caractérisé en ce que** le réservoir (8) présente un circuit de branchement supplémentaire, un filtre et une pompe supplémentaire.
